(19) Europäisches Patentamt
European Patent Office
Office européen des brevets

(11) **EP 1 456 621 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(21) Anmeldenummer: **02795113.6**

(22) Anmeldetag: **06.12.2002**

(51) Int Cl.:
***G01M 15/00*** *(2006.01)*

(86) Internationale Anmeldenummer:
**PCT/EP2002/013824**

(87) Internationale Veröffentlichungsnummer:
**WO 2003/054502 (03.07.2003 Gazette 2003/27)**

(54) **VERFAHREN ZUR LEISTUNGSERMITTLUNG, MESSVORRICHTUNG UND LEISTUNGSPRUEFSTAND FUER EINEN PRUEFLING**

METHOD FOR THE DETECTION OF PERFORMANCE, MEASURING DEVICE, AND PERFORMANCE TEST STAND FOR A TEST PIECE

PROCEDE DE DETERMINATION DE PUISSANCE, DISPOSITIF DE MESURE ET BANC D'ESSAI DE PUISSANCE POUR SPECIMEN D'ESSAI

(84) Benannte Vertragsstaaten:
**AT BE BG CH CY CZ DE DK EE ES FI FR GB GR IE IT LI LU MC NL PT SE SI SK TR**

(30) Priorität: **20.12.2001 DE 10162786**

(43) Veröffentlichungstag der Anmeldung:
**15.09.2004 Patentblatt 2004/38**

(73) Patentinhaber: **ABB AG**
**68309 Mannheim (DE)**

(72) Erfinder: **KEMNADE, H.-Jürgen**
**46286 Dorsten (DE)**

(56) Entgegenhaltungen:
EP-A- 1 217 353    WO-A1-93/06448
DE-A1- 3 135 679    DE-A1- 4 040 648
US-A- 3 942 365    US-A- 5 705 742

**Beschreibung**

Die Erfindung betrifft ein Verfahren zur Leistungsermittlung eines Prüflings, zum Beispiel eines Verbrennungsmotors, mit einem Leistungsprüfstand.

Bisherige, allgemein bekannte Verfahren zur Leistungsermittlung an einem Prüfling erfordern eine aufwendige Prüfungsvorbereitung, bei welcher der Prüfling an die Prüfvorrichtung angeschlossen wird und normalerweise unter realen Belastungsbedingungen dessen Leistung ermittelt wird.

Die realen Belastungsbedingungen werden dabei häufig durch einen die Last simulierenden Bremsmotor oder eine Bremse verwirklicht, wobei der Bremsmotor oder die Bremse üblicherweise auf die Abtriebswelle des Prüflings wirkt und zudem ungefähr die gleiche Leistungsgröße und -fähigkeit haben muß wie der Prüfling, um die Leistung des Prüflings ertesten zu können. Dabei werden insbesondere Elektromotoren als Bremsmotoren ausgestaltet, deren Stromaufnahme zur Ermittlung der Leistung dient. Als derartige Bremsantriebe sind neben Elektromotoren auch Wirbelstrombremsen bekannt.

Aus der Patentschrift DE 4040648 ist jedoch auch ein Verfahren zur prüfstandlosen Ermittlung technischer Kennwerte von Verbrennungsmotoren offenbart. In unterbrochener Folge werden für definierte Kurbelwinkelbereiche Teilumlaufzeiten ermittelt und damit die Veränderung der Winkelgeschwindigkeit innehalb charakteristischer Phasen des Arbeitsprozesses als Funktion des Kurbelwinkels bestimmt. Aus diesen Daten werden Kennzahlen für die Diagnose des Gesamtmotors gewonnen.

Soll beispielsweise ein Verbrennungsmotor eines Kraftfahrzeuges geprüft werden, ist hierfür zunächst eine beachtliche Rüstzeit notwendig, um ihn als Prüfling prüfbereit zu machen, das heißt zum Beispiel der Anschluß der Medienversorgungssysteme an den Prüfling, wie Steuerungsleitungen, Treibstoffversorgung und Kühlwasserzufuhr. Danach wird eine vergleichsweise lange Zeit für die Belastungsprüfung selbst aufgewendet, die für den Kraftfahrzeugmotor typischerweise ca. 20 bis 30 Minuten dauert, um die erforderlichen Leistungswerte zu erhalten. Dies stellt einen erheblichen Aufwand dar.

Als Prüflinge kommen prinzipiell alle leistungsabgebenden Verbrennungsmaschinen in Betracht, also beispielsweise Verbrennungskolbenmotoren von Kraftfahrzeugen oder Turbinen. Als Prüflinge sollen hier solche Maschinen bezeichnet werden, die eine Antriebsleistung von wenigstens 20 kW aufweisen.

Ausgehend von diesem Stand der Technik ist es die Aufgabe der Erfindung ein Verfahren zur Leistungsprüfung anzugeben, welche die Prüfungszeit verkürzen und zudem den Meßaufwand verringern.

Diese Aufgabe wird gelöst mit einem Verfahren zur Leistungsermittlung eines Prüflings mit den Merkmalen des Anspruchs 1. Demgemäß benötigt das erfindungsgemäße Verfahren zur Leistungsermittlung eines Prüflings eine Meßvorrichtung zur Erfassung des zeitlichen Verlaufs der Drehzahl einer Abtriebswelle des Prüflings, wobei zur Ermittlung der Leistung zu einem bestimmten Zeitpunkt ausschließlich der zeitliche Verlauf der Drehzahl gemessen wird, und wobei der Prüfling innerhalb einer solchen Zeitspanne geprüft wird, bei welcher keine Notwendigkeit einer Zwangskühlung besteht, das heißt die beim Betrieb entstehende Verlustwärme wird hauptsächlich durch den Prüfling aufgrund seiner Wärmekapazität aufgenommen und teilweise durch Strahlungs- und Konvektionswärme wieder an die Umgebung abgegeben.

Ein wesentlicher Vorteil des erfindungsgemäßen Verfahrens zur Leistungsermittlung des Prüflings besteht darin, daß nur noch die Drehzahl in Verbindung mit der Zeit als Meßgrößen gemessen werden, wodurch der Instrumentierungs- und Meßaufwand im Vergleich zu den bisher bekannten Verfahren erheblich reduziert ist.

Zum anderen ist der Zeitraum innerhalb dessen die Prüfung durchgeführt wird, vorteilhaft kurz. Die Leistungsprüfung wird nämlich in einer derart kurzen Zeit durchgeführt, daß der durch die Verbrennung entstehende Wärmeverlust überwiegend von dem Prüfling aufgenommen wird, ohne dabei jedoch in unzulässiger Weise zu überhitzen, das heißt, daß bei der Leistungsprüfung keine Betriebszustände erreicht werden, die den Prüfling übermäßig verschleißen lassen oder gar schädigen. Hauptsächlich die Wärmekapazität des Prüflings wird dazu genutzt die Abwärme aufzunehmen. Demnach ist es auch nicht mehr notwendig, für die Dauer der Leistungsmessung eine Vorrichtung zur Zwangskühlung an den Prüfling anzuschließen. Insgesamt kann gemäß der Erfindung die Prüfzeit eines typischen Kolbenverbrennungsmotors eines Kraftfahrzeuges auf etwa 1 Minute verkürzt werden.

Bei dem erfindungsgemäßen Verfahren wird die Leistung des Prüflings zu dem bestimmten Zeitpunkt mittels der Formel

$$P(t) = I \, [\mathrm{kgm^2}] * 100 * a(t) + M_{reib} \, w(t) \text{ berechnet, wobei}$$

wobei

P(t) die Leistung P zum bestimmten Zeitpunkt (t) ist, wobei I das Massenträgheitsmoment der gesamten durch den Prüfling bewegten beziehungsweise beschleunigten Drehmasse ist, wobei a(t) die Winkelbeschleunigung zum bestimmten Zeitpunkt (t) ist, wobei M$_{reib}$ der Reibmoment der gesamten durch den Prüfling bewegten Drehmasse ist, der sich der Drehbewegung beziehungsweise Drehbeschleunigung entgegenwirkt, und wobei w(t) die Winkelgeschwindigkeit zum bestimmten Zeitpunkt (t) ist.

Aus der Formel ist erkennbar, daß die Leistung nur noch von der Drehzahl und der Zeit abhängig, demgemäß in vorteilhafter Weise einfach ist, wobei die Drehzahl an sich schon eine zeitabhängige Größe ist. Mit der Messung des zeitlichen Verlaufs der Drehzahl ist es auch ohne weiteres möglich, die Winkelgeschwindigkeit, also die zeitliche Ableitung der Drehzahl, beziehungsweise die Winkelbeschleunigung, also die zeitliche Ableitung der Winkelgeschwindigkeit, für einen Leistungspunkt zu bestimmen. Die Berechnung der Winkelgeschwindigkeit und der Winkelbeschleunigung werden um so besser ausgeführt werden können, je genauer der zeitliche Verlauf der Drehzahl gemessen wird.

Eine Annahme, die das erfindungsgemäße Verfahren vorteilhaft einfach ausgestaltet, kann getroffen werden, indem das Reibmoment und das Massenträgheitsmoment als konstant angenommen werden. Diese Größen werden als Konstanten in die Formel eingesetzt, wobei diese Annahme bereits zu ausreichenden guten Ergebnissen bei der Leistungsermittlung führen.

Alternativ hierzu werden die Ergebnisse der Leistungsermittlung verbessert, wenn das Massenträgheitsmoment zwar als konstant angenommen wird, das Reibmoment jedoch nach einer zuvor für den Typ des Prüflings spezifisch ermittelten, von der Drehzahl abhängigen Reibmomentenkurve in die Formel eingesetzt wird. Demgemäß ist auch das Reibmoment abhängig von der Drehzahl. Diese Abhängigkeit kann beispielsweise nach den allgemein bekannten physikalischen Gesetzmäßigkeiten abgeleitet werden oder mittels Messungen für den betroffenen Typ an Prüfling, also empirisch ermittelt werden. Die ermittelte Reibmomentenkurve wird dann gespeichert und steht für die Berechnung der Leitungspunkte zur Verfügung.

Bei dem erfindungsgemäßen Verfahren wird der Prüfling in einem für diese Art der Leistungsprüfung eingerichteten Prüfstand getestet. Der Prüfstand wird auf die Prüfbedingungen optimal angepaßt und bietet auf diese Weise entsprechend günstige Prüfbedingungen.

Bei einem vorteilhaften Vorgehen bei der Prüfung wird der Prüfling zunächst durch einen Anlasser bis zum Erreichen einer vorgegebenen, für den Prüfling spezifischen Drehzahl angetrieben. Bei Verbrennungsmotoren sind häufig die Leerlaufdrehzahlen, typisch sind hier Drehzahlen zwischen 400 und 1400 Umdrehungen pro Minute (U/min), diejenigen, die für diesen Verfahrensschritt vorgegeben werden. Der Motor befindet sich dann unter besonders günstigen Startbedingungen. Bei Turbinen kann die typischen vorgegebenen Drehzahlen wesentliche höher sein, beispielsweise 3000 U/min und höher.

Bei einem weiteren erfindungsgemäßen Verfahrensschritt wird der Prüfling bei Erreichen einer zuvor festgelegten Drehzahl zum selbsttätigen Betrieb einbeziehungsweise angestellt. Wenn besonders günstige Startbedingungen herrschen sollen, wird die festgelegte Drehzahl die vorgebbare Drehzahl sein. Prinzipiell reicht jedoch eine minimale Drehzahl als festgelegte Drehzahl aus, bei welcher der Prüfling gerade noch gestartet werden kann. Der Vorteil dabei ist es, daß ein für das Erreichen der festgelegten Drehzahl erforderlicher Anlasser besonders klein ausgelegt werden kann.

Ein möglicher erfindungsgemäßen Verfahrensschritt sieht vor, daß der Anlasser nach Erreichen der bestimmten Drehzahl oder wenn der Prüfling im selbsttätigen Betrieb läuft, abgeschaltet wird. Das heißt, der Prüfling gibt Leistung ab und treibt demnach seine Abtriebswelle bereits selbsttätig an, wenn der Anlasser abgestellt wird. Damit ist eine Beeinflussung der Leistungsmessung durch einen weiteren aktiven Antrieb beziehungsweise Bremsantrieb vermieden. Bei dieser Art der erfindungsgemäßen Leistungsmessung ist das ein besonderer Vorteil der Erfindung. Demgemäß dreht insbesondere der Läufer des Anlassers, wie bereits erläutert ohne Eigenantrieb, aber durch den Prüfling angetrieben mit. In diesem Fall ist das Massenträgheitsmoment der drehenden Massen des Anlassers bei der Berechnung des gesamten Massenträgheitsmoments zu berücksichtigen.

Der Anlasser kann aber auch von dem Prüfling entkoppelt werden. Dann wird dessen Drehmasse bei der Berechnung des gesamten Massenträgheitsmoments nicht berücksichtigt. Der Prüfling kann vorteilhaft schnell beschleunigt beziehungsweise drehzahlbeschleunigt werden.

In einer bevorzugten Ausgestaltung des erfindungsgemäßen Verfahrens wird der Prüfling im Eigenbetrieb bis auf eine maximale Nenndrehzahl beschleunigt. Damit wird eine vergleichsweise kurze Prüfzeit erreicht.

Die Prüfzeit wird weiter verkürzt, wenn die Beschleunigung unter Vorgabe eines Vollastwertes für die Drehzahl erfolgt. Die Prüfzeit ist dann vorteilhafterweise minimiert.

Eine weitere Ausgestaltung des erfindungsgemäßen Verfahrens sieht vor, eine Anzahl von Leistungen des Prüflings zu festgelegten Drehzahlenwerten ermittelt wird, daß die Leistungspunkte zwischen den gemessenen Drehzahlen durch ein Interpolationsverfahren, insbesondere ein lineares, verbunden werden, und daß die derart ermittelte Leistungskurve in Abhängigkeit von der Drehzahl und gegebenenfalls die Meßwerte gespeichert werden. Häufig ist es das Ziel der Leistungsermittlung neben einem Leistungspunkt, beispielsweise der maximalen Leistung oder eine Einzelleistung im Soll-Betriebspunkt, eine Leistungskurve zu erhalten, zum Beispiel, weil die Leistungscharakteristik eines Automotors ermittelt werden soll. Das wird vorteilhafterweise durch die soeben beschriebenen Verfahrensschritte erreicht.

Eine Weiterbildung des erfindungsgemäßen Verfahrens sieht vor, daß durch eine Auswertevorrichtung die Meßwerte aufgenommen und gegebenenfalls graphisch dargestellt sowie zur weiteren Datenverarbeitung bereitgestellt werden. Demgemäß stellt die Auswertevorrichtung sowohl die Meßdaten, als auch die Datenauswertung, in Form von gespeicherten Ergebnisdaten oder bereits als Graphik dar. Damit kann durch eine erste Blickkontrolle die Güte des Prüflings erkannt werden. Ebenso wird es aufgrund der gemessenen Daten und der Ergebnisdaten möglich, die Kontrolle, ob die Leistungsprüfung erfolgreich war, zu automatisieren.

Weitere vorteilhafte Ausgestaltungen des Erfindungsgegenstandes sind den abhängigen Ansprüchen zu entnehmen.

Anhand des folgenden Ausführungsbeispiels sollen die Erfindung, die Vorteile sowie weitere Verbesserungen der Erfindung dargestellt und näher erläutert werden.

Es zeigen:

Fig. 1    eine Schnittansicht eines Leistungsprüfstands und
Fig. 2    eine Draufsicht auf den Leistungsprüfstand.

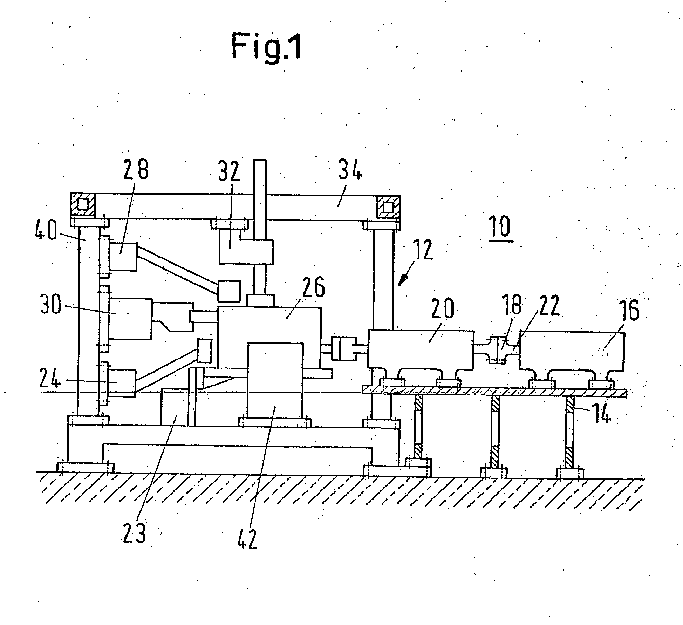

Fig. 1 zeigt eine Schnittansicht eines Leistungsprüfstands 10. Als Basis des Leistungsprüfstandes dient ein Gestell 12, an dem eine Tischvorrichtung 14 angeordnet ist.

Auf der Tischvorrichtung 14 ist eine Anlasservorrichtung 16 angeordnet, an der mittels einer Kupplung 18 eine Kupplungs- und Prüfvorrichtung 20 verbunden ist. Die Kupplung 18 ist in dieser Ausgestaltung starr ausgeführt, so daß die Anlasservorrichtung 16 und die Kupplungs- und Prüfvorrichtung 20 im gekuppelten Zustand eine Anlassereinheit bilden.

Die Kupplungs- und Prüfvorrichtung 20 ist an einen Prüfling 26 ankuppelbar. Die Ankupplung erfolgt ungedämpft. Auf diese Weise wird die Leistung, insbesondere die Leistungscharakteristik im Prüfbetrieb von dem Prüfling 26 möglichst direkt an die Kupplungs- und Prüfvorrichtung 20 übertragen.

In diesem Beispiel ist der Prüfling 26 eine 4-Zylinder 4 Takt Reihenmotor. Als Prüfling 16 kommt aber auch jede andere leistungsabgebende Verbrennungsmaschine in Betracht, wie zum Beispiel Zweitakt-, Dieselmotoren und Turbinen.

Die Kupplungs- und Prüfvorrichtung 20 weist in diesem Beispiel einen Inkrementalgeber mit 2500 Inkrementen pro 360 Grad, eine Signalaufbereitung und eine Meßwerterfassungsvorrichtung mit einer Datenerfassungsrate von wenigstens 200 kHz auf. Darüber hinaus sind an der Anlasser- und Prüfvorrichtung 20 alle Signalaufnehmer angebracht, die zur Erfassung der Meßwerte, die über eine Welle 22 in die Anlasser- und Prüfvorrichtung 20 gelangen und aufgenommen werden sollen. Die Auswertevorrichtung ist im dargestellten Beispiel eine Datenverarbeitungsanlage in Form eines Personalcomputers (PC), der in der Figur jedoch nicht gezeigt ist und über eine ebenfalls nicht dargestellte Signalleitung mit der Anlasser- und Prüfvorrichtung 20 verbunden ist. Die Auswertevorrichtung übernimmt die Auswertung der vom Leistungsprüfstand 10, kurz Prüfstand 10 erhaltenen Meßdaten.

Mit einer Hebevorrichtung 23 ist in diesem Beispiel der Reihenmotor 26 aus einem nicht in der Figur dargestellten Transportsystem heraushebbar und wird in die Prüfposition am Prüfstand verbracht. Als Transportsystem kommt beispielsweise ein heute übliches führerloses Einzeltransportsystem in Betracht. Es ist aber ohne weiteres jedes für den Reihenmotor 26 beziehungsweise den Prüfling 26 geeignete kontinuierliche oder diskontinuierliche Fördersystem verwendbar. Der erfindungsgemäße Prüfstand 10 ist auf einfache Weise auf die betreffenden Gegebenheiten konstruktiv anpaßbar.

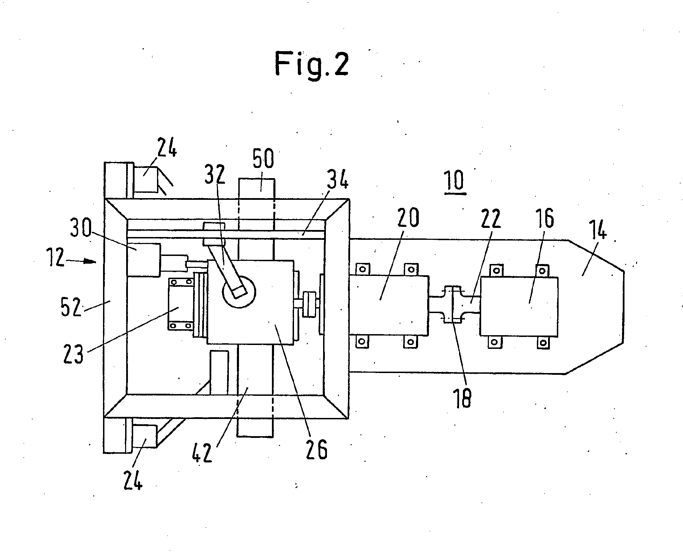

Des weiteren sind an dem Gestell 12 zwei Schraubvorrichtungen 24 beweglich angeordnet, von denen nur eine in dieser Figur sichtbar ist, die den auf der Transportvorrichtung montierten Reihenmotor 26 lösen. Die Hebevorrichtung 23 verbringt den Reihenmotor 26 in eine Prüfposition in eine erste 42 und eine zweite Haltevorrichtung 50 den Reihenmotor in der Prüfposition fixieren, indem diese von zwei Seiten in einer horizontalen Ebene gegeneinander verschoben werden und der zwischen den Haltevorrichtungen 42, 50 befindliche Reihenmotor 26 derart verklemmt und gehalten wird. Von den Haltevorrichtungen 42, 50 ist nur die erste Haltevorrichtung 42 in dieser Figur gezeigt. Jedoch ist die Wirkungsweise beider Haltevorrichtungen 42, 50 in der Figur 2 erkennbar.

Eine Multikupplungsvorrichtung 28 ist dafür vorgesehen, eine nicht weiter dargestellte Kraftstoffversorgungsleitung mit einem Kraftstoffsystem des Reihenmotors 26 zu verbinden und elektrische Versorgungs-, Steuer- sowie Signalleitungen mit den entsprechenden Leitungen des Reihenmotors 26 zu verbinden. Auch die Multikupplungsvorrichtung 28 ist in drei Raumrichtungen bewegbar, um an die entsprechende Kupplungsstelle am Reihenmotor 26 anschließen zu können.

Eine Abdichtvorrichtung 30 ist an ein Abgassystem des Reihenmotors 26 dicht schließend anschließbar, wobei im Betriebsfall entstehende Abgase des Reihenmotors 26 über eine nicht in der Figur dargestellte Abgasleitung von dem Prüfstand 10 weg geleitet werden. Um diese Funktion zu erfüllen, ist die Abdichtvorrichtung 30, vergleichbar mit der Multikupplungsvorrichtung 28, in den drei Raumrichtungen bewegbar.

Ein Niederhalter 32 ist an einem oberen Querträger 34 des Gestells 12 beweglich angeordnet, wobei der Niederhalter 32 zur zusätzlichen Fixierung des Reihenmotors 26, insbesondere während des Testbetriebes vorgesehen ist. Dieser wird senkrecht von oben an den Reihenmotor 26 heranbewegt und mit einer vorgegebenen Kraft beaufschlagt, also verspannt.

Im folgenden wird der erfindungsgemäße Verfahrensablauf anhand der Prüfvorrichtung gemäß Fig. 1 näher beschrieben.

Mit der Transportvorrichtung wird der Reihenmotor 26 zu dem Prüfstand 10 transportiert und in eine dafür vorgesehene Entladeposition in Bereich des Gestells 12 verbracht. Mit den zwei sich gegenüberliegenden Schraubvorrichtungen 24 wird zunächst der Reihenmotor 26 von einer Transporthalterung gelöst. Die Hebevorrichtung 23 befindet sich unterhalb der Entladeposition und wird nun im wesentlichen nach oben bewegt und hebt dabei den Reihenmotor 26 aus der Transportvorrichtung in eine Prüfposition. In diesem Beispiel verbleibt die Transportvorrichtung in der Entladeposition im Prüfstand 10. Es ist aber auch denkbar, daß diese in eine Parkposition außerhalb des Prüfstandbereiches bewegt wird.

Mit den Haltevorrichtungen 42, 50 wird der Reihenmotor 26 in der Prüfposition fest verspannt, das heißt, daß die Haltevorrichtungen 42, 50 den Reihenmotor 26 in einer horizontalen Richtung mit einer zuvor festgelegten Kraft beaufschlagen. Zudem verhindert die Hebevorrichtung 23, daß der Reihenmotor 26 nach unten bewegt werden kann.

Der Prüfling 26 beziehungsweise der Reihenmotor 26 ist nun fest mit dem Prüfstand 10 verbunden beziehungsweise gegen dessen Gestell 12 verspannt. Der Niederhalter 32 wird von oben gegen den Reihenmotor 26 in eine vorgegebene Position verfahren und derart der Reihenmotor 26 gegen den Prüfstand 10 beziehungsweise die Hebevorrichtung 23 verspannt. Damit wird eine zusätzliche Fixierung des Reihenmotors 26 erreicht, der demgemäß dann an zwei Stellen in horizontaler Richtung sowie von oben und unten an zwei weiteren Stellen in vertikaler Richtung gehalten wird.

Die Multikupplungsvorrichtung 28 schließt an die dafür vorgesehene Gegenkupplung beziehungsweise an eine entsprechende Stelle am Reihenmotor 26 an. In einem weiteren Verfahrensschritt wird die Abdichtvorrichtung 30 an das Abgassystem des Reihenmotors 26 angeschlossen.

Dabei ist die Reihenfolge der auszuführenden Schritte nicht zwangsläufig wie in dem genannten Beispiel festgelegt. Es gibt eine Anzahl verschiedener zweckmäßiger Sequenzen, wobei es auch möglich ist, daß verschiedene Schritte parallel ausgeführt werden können. Beispielsweise kann der Anschluß die Abdichtvorrichtung 30 in diesem Beispiel zeitlich parallel zum Anschluß der Multikupplungvorrichtung 28 erfolgen, sofern sich die Bewegungsabläufe der Vorrichtung nicht gegenseitig stören.

In dem Beispiel werden die Abläufe am Prüfstand 10 und der Leistungsprüfung mit einer Meß- und Steuerungseinrichtung gesteuert und gemessen, die nicht in der Figur gezeigt ist, jedoch mittels entsprechender Steuer- und Signalkabel mit den verschiedenen Vorrichtungen des Prüfstandes 10 verbunden ist. Nachdem der Reihenmotor 26 an seiner Prüfposition fixiert wurde, kann das Verfahren zur Leistungsermittlung beginnen.

Hierzu wird der Reihenmotor 26 zunächst mit der über die Kupplungs- und Prüfvorrichtung 20 angekoppelten Anlasservorrichtung 16 bis auf eine Leerlaufdrehzahl von ca. 850 Umdrehungen pro Minute (U/min) beschleunigt. Kraftfahrzeugmotoren haben Leerlaufdrehzahlen von üblicherweise ca. 450 bis 1000 U/min.

Im Prinzip gibt es nun zwei erfindungsgemäße Möglichkeiten den Leistungstest weiterzuführen. Entweder wird nun die Anlasservorrichtung 16 von der Meß- und Kupplungsvorrichtung 20 automatisch abgekuppelt oder einfach nur abgeschaltet und dreht als angekuppelte Masse mit der Abtriebswelle des Reihenmotors 26 mit. Unabhängig davon, wie mit der Anlasservorrichtung 16 verfahren wird, wird der Reihenmotor 26 von der Meß- und Steuerungseinrichtung angelassen und mit Eigenantrieb betrieben.

In beiden Fällen ist es aber von Vorteil, daß die Anlasservorrichtung 16 nur auf eine vergleichsweise kleine Leistung ausgelegt zu werden braucht. Die Anlasservorrichtung 16 muß nämlich nur das Hochschleppen des Reihenmotors 26 bis zu der Leerlaufdrehzahl leisten und ist dann nicht weiter aktiv, das heißt beispielsweise als Bremse, an der Ermittlung der Leistung beteiligt. Die sonst üblichen Antriebe in der gleichen Leistungsgröße wie der Prüfling sind vorteilhafterweise vermieden.

In beiden Fällen kann der Meßvorgang zur Leistungsermittlung beginnen, indem der Reihenmotor 26 mit Vollastvorgabe bis auf dessen maximale Nenndrehzahl beschleunigt wird. Dieser Vorgang wird noch 4-mal wiederholt. Während der gesamten Versuchszeit wird der zeitliche Verlauf der Drehzahl der Abtriebswelle des Reihenmotors 26 durch die Meß- und Steuerungsvorrichtung erfaßt. Eine Beschleunigung von Leerlaufdrehzahl bis zur maximalen Nenndrehzahl dauert in diesem Beispiel 12 Sekunden. Mit den Wiederholungen dauert die gesamte Leistungsprüfung lediglich 90 Sekunden. Das ist eine Zeitspanne, die der Reihenmotor 26 ohne jegliche Fremdkühlung, also beispielsweise ohne Kühlwasser betrieben werden kann.

Es hat sich herausgestellt, daß die heute üblichen Kraftfahrzeugmotoren, insbesondere die Diesel- und die Benzinhubkolbenmotoren mit drei Wiederholungen bereits sehr gute Leistungsmeßwerte innerhalb einer Meßzeit von insgesamt einer Minute ergeben. Häufigere Wiederholungen machen die Messung statistisch entsprechend aussagefähig, gehen jedoch zu Lasten der Prüfzeit, welche letztlich die Anzahl der Prüfungen je Zeiteinheit bestimmt.

Das Erreichen der vergleichsweise kurzen Testzeit wird auch dadurch unterstützt, daß der Reihenmotor 26 nicht wie im Stand der Technik bisher üblich, durch eine der eigenen Leistung entsprechenden Last, wie beispielsweise eine Wirbelstrombremse, belastete wird, um die Leistungskurve zu erhalten, sondern es werden nur die an der Abtriebswelle angeschlossenen Drehmassen beschleunigt, das heißt bis auf die maximale Drehzahl gebracht, um die Leistungsmessung durchzuführen.

Mit den gemessenen zeitlichen Verläufen der Drehzahl wird zunächst die Winkelgeschwindigkeit und die Winkelbeschleunigung für eine Anzahl von festgelegten Drehzahlen errechnet, beispielsweise für jede Drehzahl zwischen Leerlaufdrehzahl und maximaler Nenndrehzahl in Schritten von 100 U/min. Zu jedem der Drehzahlpunkte wird nun die Leistung bestimmt, indem die Summe aus einer ersten Multiplikation des konstanten gesamten Massenträgheitsmomentes mit der Zahl 100 und mit der Winkelbeschleunigung zu der bestimmten Drehzahl und einer zweiten Multiplikation eines konstanten Reibmoments mit der Winkelgeschwindigkeit in der bestimmten Drehzahl berechnet wird. Das gesamte Massenträgheitsmoment ist eine Konstante, die sich aus der Summe der einzelnen Massenträgheitsmomente der an der Messung beteiligten drehenden Elemente und Vorrichtungteile ergibt, in diesem Beispiel also die Massenträgheitsmomente der bewegten Wellen des Reihenmotors 26, der drehenden Teile der Meß- und Kupplungsvorrichtung 20 sowie der bewegten Welle mit Rotor der Anlasservorrichtung 16, die hier ein Elektromotor ist und während der Leistungsprüfung nicht von dem Reihenmotor 26 entkoppelt werden soll.

Als Grundlage der Berechnung dienen die Meßwerte. Die Berechnung wird um so besser, je genauer der zeitliche Verlauf der Drehzahl bestimmt wird. Im beschriebenen Beispiel ist, wie eingangs bereits beschrieben ein Inkrementalgeber mit 2500 Inkrementen pro 360 Grad in der Meß- und Kupplungsvorrichtung 20 eingebaut. Zudem werden die Meßdaten mit einer Meßkarte erfaßt, die eine Datenerfassungsrate von größer 200 kHz aufweist. Die Meß- und Steuerungseinrichtung ist als Personal Computer (PC) ausgestaltet, der sowohl die Meßwerterfassung und die Meßdatenauswertung, als auch die Steuerung und Regelung der Prüfungsvor- und -nachbereitung sowie der Koordination der Bewegungen der Vorrichtungen zum Anschluß und zum Lösen des Reihenmotors 26 nach der Leistungsmessung übernimmt. Mit einer derartigen Meßvorrichtung wurden Meßwerte gemessen beziehungsweise Motorleistungen berechnet, die nur eine Ungenauigkeit +3% beziehungsweise -2% aufweisen. Jedenfalls können ohne weiters die üblichen Anforderungen an die Meßgenauigkeit von +/- 5% ohne weiteres eingehalten werden.

Um eine Leistungskurve aus den berechneten Einzelpunkten zu erhalten, bietet sich ein Interpolationsverfahren an. Sind die Meß- und die Berechnungspunkte in ausreichender Anzahl gelegt, reicht in der Regel ein lineares Interpolationsverfahren aus, um zu hinlänglichen Ergebniskurven zu gelangen. Es können aber auch vorgegebene Polynome als Basis für eine Interpolation genommen werden.

Als vorteilhafte und aussagefähige Ergebnisse werden von der Auswertevorrichtung wahlweise die Leistung über der Drehzahl, die Leistung über der Zeit oder die Leistung in Drehzahlinkrementen graphisch dargestellt. Jede andere Darstellung der Meß-, Rechen- oder Zwischenergebnisse ist ohne weiteres denkbar und mit der Auswertevorrichtung realisierbar.

Nach dem Ende der Leistungsprüfung wird der Reihenmotor 26 abgestellt und kann vom Prüfstand 10 gelöst werden, das heißt, die Abdichtvorrichtung 30, die Multikupplungsvorrichtung 28 und die Niederhaltevorrichtung 32 werden von dem Prüfling entfernt. Die Haltevorrichtungen 24 bewegen sich in eine Ausgangslage zurück und lösen derart die Fixierung des Reihenmotors 26. Sind alle Verbindungen mit den Vorrichtungen des Prüfstandes 26 gelöst, wird dieser noch von der Hebevorrichtung getragen, welche den Reihenmotor wieder aus der Prüfposition weg verbringt und zurück auf die Transporteinrichtung.

Mittels der Schraubvorrichtungen 24 wird der Reihenmotor 26 wieder auf der Transportvorrichtung montiert beziehungsweise dessen Transport auf dieser gesichert, so daß der Weitertransport zu einer Stelle, an der ein nächster Produktionsschritt vorgesehen ist, erfolgen kann.

Fig. 2 zeigt eine Draufsicht auf den Leistungsprüfstand 10. Dabei wurden in dieser Figur diejenigen Bauelemente mit den gleichen Bezugszeichen versehen, die bereits in der Fig. 1 eingeführt wurden und auch in dieser Figur gezeigt sind.

Insbesondere zeigt sich in dieser Ansicht, daß das Gestell 12 in einer horizontalen Ebene 52 rahmenartig ausgebildet ist. Die Schraubvorrichtungen 24 sind an zwei Seiten des Rahmens gegenüberliegend angeordnet. Auf einer dritten Seite ist die Anlassereinheit aus Anlasservorrictung 16, Kupplung 18 sowie Meß- und Kupplungsvorrichtung 20 auf der Tischvorrichtung 14 angeordnet.

Der Reihenmotor 26 ist in seiner Prüfposition dargestellt und wurde über die vierte Seite in den Prüfstand 10 verbracht. Diese bevorzugte Anordnung der verschiedenen Vorrichtungen am Prüfstand 10 hat den besonderen Vorteil, daß diese besonders übersichtliche und zugänglich angeordnet sind. Mögliche Störungen können daher häufig schon bei einem ersten Kontrollblick erkannt werden. Zudem läßt sich der Prüfstand 10 auf einfache Weise in den Produktionsablauf integrieren, weil dieser von einer Seite vollständig zugänglich ist.

**Patentansprüche**

1. Verfahren zur Leistungsermittlung eines Verbrennungsmotors (Prüfling) (26), mit einer Messvorrichtung zur Erfassung des zeitlichen Verlaufs der Drehzahl einer Abtriebswelle des Verbrennungsmotors (Prüfling) (26), wobei zur Ermittlung der Leistung zu einem bestimmten Zeitpunkt ausschließlich der zeitliche Verlauf der Drehzahl gemessen wird, und wobei der Verbrennungsmotor (Prüfling) (26) innerhalb einer solchen Zeitspanne geprüft wird, bei welcher keine Notwendigkeit einer Zwangskühlung besteht, wobei keine Zwangskühlungsvorrichtung ange-schlossen wird und wobei die Leistung des Prüflings zu dem bestimmten Zeitpunkt gemäß der Formel

$$P(t) = I\ [\text{kgm2}] * 100 * \alpha(t) + M_{\text{reib}}\ \omega(t)$$

berechnet wird mit

$P(t)$ = Leistung **P** zum bestimmten Zeitpunkt (t), mit
**I** = Massenträgheitsmoment der gesamten durch den Verbrennungsmotor (Prüfling) (26) bewegten beziehungs-weise beschleunigten Drehmasse, mit
$\alpha(t)$ = Winkelbeschleunigung zum bestimmten Zeitpunkt (t), mit
**M**reib = Reibmoment der gesamten durch den Verbrennungsmotor (Prüfling) (26) bewegten Drehmasse, die der Drehbewegung beziehungsweise Drehbeschleunigung entgegenwirkt, und mit
$\omega(t)$ = die Winkelgeschwindigkeit zum bestimmten Zeitpunkt (t) und

wobei das Massenträgheitsmoment als konstant angenommen wird und dass das Reibmoment nach einer zuvor für den Typ des Verbrennungsmotors (Prüfling) (26) spezifisch ermittelten, von der Drehzahl abhängigen Reibmomentenkurve in die Formel eingesetzt wird.

2. Verfahren nach Anspruch 1, **dadurch gekennzeichnet, dass** der Verbrennungsmotor (Prüfling) (26) durch einen Anlasser (16) bis zum Erreichen einer vorgegebenen für Verbrennungsmotor (Prüfling) (26) spezifischen Drehzahl angetrieben wird.

3. Verfahren nach Anspruch 1 oder 2, **dadurch gekennzeichnet, dass** der Verbrennungsmotor (Prüfling) (26) bei Erreichen einer zuvor festgelegten Drehzahl zum selbsttätigen Betrieb gestartet wird.

4. Verfahren nach einem der vorgenannten Ansprüche, **dadurch gekennzeichnet, dass** der Anlasser (16) nach Erreichen der bestimmten Drehzahl oder, wenn der Verbrennungsmotor (Prüfling) (26) im Eigenbetrieb läuft, abgeschaltet wird.

5. Verfahren nach einem der vorgenannten Ansprüche, **dadurch gekennzeichnet, dass** der Anlasser (16) von dem Verbrennungsmotor (Prüfling) (26) entkoppelt wird.

6. Verfahren nach einem der vorgenannten Ansprüche, **dadurch gekennzeichnet, dass** der Verbrennungsmotor (Prüfling) (26) im Eigenbetrieb bis auf eine maximale Nenndrehzahl beschleunigt wird.

7. Verfahren nach Anspruch 6, **dadurch gekennzeichnet, dass** die Beschleunigung unter Vorgabe eines Vollastwertes für die Drehzahl erfolgt.

8. Verfahren nach einem der vorgenannten Ansprüche, **dadurch gekennzeichnet, dass** eine Anzahl von Leistungswerten des Verbrennungsmotors (Prüfling) (26) zu festgelegten Drehzahlwerten ermittelt wird, dass die Leistungspunkte zwischen den gemessenen Drehzahlen durch ein Interpolationsverfahren, insbesondere ein lineares, verbunden werden, und dass die derart ermittelte Leistungskurve in Abhängigkeit von der Drehzahl und gegebenenfalls die Messwerte gespeichert werden.

**Claims**

1. Method for determining the power of an internal combustion engine, (test specimen) (26), with a measuring device for registering the time profile of the rotational speed of an output shaft of the internal combustion engine (test specimen) (26), the time profile of the rotational speed being exclusively measured in order to determine the power at a specific time, and the internal combustion engine (test specimen) (26) being tested within a time period during which there is no necessity for forced cooling, wherein a forced-cooling device is not connected and wherein the power of the test specimen at the particular time is calculated according to the formula

$$P(t) = I \; [\mathrm{kgm}^2] \; * \; 100 \; * \; \alpha \; (t) \; + \; M_{\mathrm{fric}} \; \omega(t),$$

where

$P(t)$ = power **P** at the specific time (t), where
**I** = mass moment of inertia of the entire rotary mass which is moved or accelerated by the internal combustion engine (test specimen) (26), where
$\alpha(t)$ = angular acceleration at the specific time (t), where
$M_{\mathrm{fric}}$ = moment of friction of the entire rotary mass moved by the internal combustion engine (test specimen) (26), which rotary mass counteracts the rotary movement or rotary acceleration, and where
$\omega(t)$ = the angular speed at the specific time (t) and wherein the mass moment of inertia is assumed to be constant, and in that the moment of friction is inserted into the formula in accordance with a moment of friction curve which is specifically determined in advance for the type of internal combustion engine (test specimen) (26) and is dependent on the rotational speed.

2. Method according to Claim 1, **characterized in that** the internal combustion engine (test specimen) (26) is driven by a starter (16) until a predefined rotational speed which is specific to the internal combustion engine (test specimen) (26) is reached.

3. Method according to Claim 1 or 2, **characterized in that** the independent operation of the internal combustion engine (test specimen) (26) is started when it reaches a rotational speed which is defined in advance.

4. Method according to one of the abovementioned claims, **characterized in that** the starter (16) is switched off after the specific rotational speed is reached or if the internal combustion engine (test specimen) (26) is running under its own power.

5. Method according to one of the abovementioned claims, **characterized in that** the starter (16) is decoupled from the internal combustion engine (test specimen) (26).

6. Method according to one of the abovementioned claims, **characterized in that** the internal combustion engine (test specimen) (26) is accelerated to a maximum rated rotational speed when running under its own power.

7. Method according to Claim 6, **characterized in that** the acceleration takes place with the predefinition of a full load value for the rotational speed.

8. Method according to one of the abovementioned claims, **characterized in that** a number of power values of the internal combustion engine (test specimen) (26) are determined at defined rotational speed values, **in that** the power points between the measured rotational speeds are connected by means of an interpolation method, in particular a linear one, and **in that** the power curve which is determined in this way is stored as a function of the rotational speed and, if appropriate, the measured values.

**Revendications**

1. Procédé de détermination de puissance d'un moteur à combustion interne (spécimen d'essai) (26), avec un dispositif de mesure pour détecter la courbe dans le temps de la vitesse de rotation d'un arbre d'entraînement en sortie du moteur à combustion interne (spécimen d'essai) (26), seule la courbe dans le temps de la vitesse de rotation étant mesurée pour déterminer la puissance à un instant défini et le moteur à combustion interne (spécimen d'essai) (26) étant contrôlé à l'intérieur d'un intervalle de temps ne présentant aucune nécessité de refroidissement contraint, aucun dispositif de refroidissement contraint n'étant raccordé et la puissance du spécimen d'essai à un instant défini étant calculé selon la formule :

$$P(t) = I \; [kgm2] \; * \; 100 \; * \; \alpha(t) \; + \; M_{reib} \; \omega(t)$$

où :

P(t) = puissance P à l'instant défini (t) ;

I = moment d'inertie de masse de la masse en rotation totale déplacée et/ou accélérée par le moteur à combustion interne (spécimen d'essai) (26) ;

$\alpha$(t) = accélération angulaire à l'instant défini (t) ; $M_{reib}$ = moment de frottement de la masse en rotation totale déplacée par le moteur à combustion interne (spécimen d'essai) (26) agissant contre le mouvement de rotation et/ou l'accélération de rotation ; et

$\omega$(t) = vitesse angulaire à l'instant défini (t) ; et le moment d'inertie de masse prenant la forme d'une constante et le moment de frottement déterminé d'après une courbe de moment de frottement spécifiquement déterminée au préalable pour le type de moteur à combustion interne (spécimen d'essai) (26), en fonction de la vitesse de rotation, étant utilisé dans la formule.

2. Procédé selon la revendication 1, **caractérisé en ce que** le moteur à combustion interne (spécimen d'essai) (26) est entraîné par un démarreur (16) jusqu'à atteindre une vitesse de rotation prédéfinie spécifique au moteur à combustion interne (spécimen d'essai) (26).

3. Procédé selon la revendication 1 ou 2, **caractérisé en ce que** le moteur à combustion interne (spécimen d'essai) (26) est démarré lorsqu'une vitesse de rotation déterminée permettant un fonctionnement automatique est atteinte.

4. Procédé selon l'une quelconque des revendications précédentes, **caractérisé en ce que** le démarreur (16) est déconnecté une fois que la vitesse de rotation définie est atteinte ou lorsque le moteur à combustion interne (spécimen d'essai) (26) tourne en fonctionnement autonome.

5. Procédé selon l'une quelconque des revendications précédentes, **caractérisé en ce que** le démarreur (16) est découplé par le moteur à combustion interne (spécimen d'essai) (26).

6. Procédé selon l'une quelconque des revendications précédentes, **caractérisé en ce que** le moteur à combustion interne (spécimen d'essai) (26) est accéléré en fonctionnement autonome jusqu'à une vitesse de rotation nominale maximale.

7. Procédé selon la revendication 6, **caractérisé en ce que** l'accélération se produit dans le cadre d'une directive de valeur de pleine charge pour la vitesse de rotation.

8. Procédé selon l'une quelconque des revendications précédentes, **caractérisé en ce qu'**un nombre de valeurs de puissance du moteur à combustion interne (spécimen d'essai) (26) est calculé pour des valeurs de vitesse de rotation fixes, que les points de puissance entre les vitesses de rotation mesurées sont reliés par un procédé d'interpolation, notamment linéaire, et que la courbe de puissance ainsi calculée est mémorisée en fonction de la vitesse de rotation ainsi que le cas échéant des valeurs de mesure.

EP 1 456 621 B1

# Fig.1

10

EP 1 456 621 B1

# Fig.2

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4040648